(19) Europäisches Patentamt / European Patent Office / Office européen des brevets

(11) **EP 3 662 491 B1**

(12) **EUROPÄISCHE PATENTSCHRIFT**

(45) Veröffentlichungstag und Bekanntmachung des Hinweises auf die Patenterteilung:
**18.11.2020   Patentblatt 2020/47**

(21) Anmeldenummer: **19728368.2**

(22) Anmeldetag: **28.05.2019**

(51) Int Cl.:
*H01G 9/008* (2006.01)     *H01G 9/14* (2006.01)
*H01G 9/15* (2006.01)     *H01G 9/28* (2006.01)
*H01G 4/228* (2006.01)     *H01G 4/232* (2006.01)
*H01G 4/30* (2006.01)     *H01G 4/38* (2006.01)

(86) Internationale Anmeldenummer:
**PCT/EP2019/063810**

(87) Internationale Veröffentlichungsnummer:
**WO 2019/233825 (12.12.2019 Gazette 2019/50)**

(54) **KONDENSATOR-VERBUND-BAUTEIL**

CAPACITIVE COMPOSITE COMPONENT

COMPOSANT CAPACITIF COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2018   DE 102018208743**

(43) Veröffentlichungstag der Anmeldung:
**10.06.2020   Patentblatt 2020/24**

(73) Patentinhaber: **Würth Elektronik eiSos GmbH & Co. KG**
**74638 Waldenburg (DE)**

(72) Erfinder: **KLENNER, Günther**
**83022 Rosenheim (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
JP-A- H0 191 411          JP-A- H09 326 334
JP-A- 2003 234 246     JP-A- 2017 199 867
JP-U- S5 547 718          KR-A- 20170 060 926
US-A1- 2016 020 024

**Beschreibung**

Die Erfindung betrifft ein Kondensator-Verbund-Bauteil gemäß dem Oberbegriff des Anspruchs 1.

Aus der US 2017/0018373 A1 ist ein Kondensator-Verbund-Bauteil bekannt, das einen Elektrolytkondensator und einen Keramikkondensator umfasst. Der Keramikkondensator ist parallel zu dem Elektrolytkondensator geschaltet und unterhalb des Elektrolytkondensators angeordnet, so dass sich der Keramikkondensator im montierten Zustand des Kondensator-Verbund-Bauteils zwischen einer Leiterplatte und dem Elektrolytkondensator befindet.

Aus der JP 2017-199 867 A ist ein Kondensator-Verbund-Bauteil bekannt, das einen Elektrolytkondensator und einen Keramikkondensator umfasst. Der Keramikkondensator ist parallel zu dem Elektrolytkondensator geschaltet und außerhalb eines Gehäuses angeordnet und von einem zusätzlichen Dichtungsring umgeben.

Aus der JP S55 47718 U ist ein Kondensator-Verbund-Bauteil bekannt, das einen Elektrolytkondensator und einen Keramikkondensator umfasst. Der Keramikkondensator ist parallel zu dem Elektrolytkondensator geschaltet. Der Keramikkondensator und der Elektrolytkondensator sind in einem gemeinsamen Gehäuse angeordnet.

Der Erfindung liegt die Aufgabe zugrunde, ein Kondensator-Verbund-Bauteil zu schaffen, das einfach, flexibel und zuverlässig in eine elektronische Schaltung integrierbar ist.

Diese Aufgabe wird durch ein Kondensator-Verbund-Bauteil mit den Merkmalen des Anspruchs 1 gelöst. Erfindungsgemäß wurde erkannt, dass das bekannte Kondensator-Verbund-Bauteil aufgrund des Elektrolytkondensators und des Keramikkondensators und den zugehörigen parasitären Serieninduktivitäten Eigenresonanzfrequenzen hat, die erheblich voneinander abweichen. In einem Frequenzbereich zwischen den Eigenresonanzfrequenzen wirkt die Parallelschaltung des Elektrolytkondensators und des Keramikkondensators als Parallelschwingkreis, so dass durch die Parallelschaltung eine Parallelresonanz und eine unerwünschte Impedanzüberhöhung erzeugt werden. Dadurch, dass bei dem erfindungsgemäßen Kondensator-Verbund-Bauteil der Elektrolytkondensator als Wickelkondensator ausgebildet ist, können der Elektrolytkondensator und der Keramikkondensator in einfacher und flexibler Weise geometrisch aufeinander abgestimmt werden, so dass die Leitungslängen der Verbindungsleitungen zur Parallelschaltung des Elektrolytkondensators und des Keramikkondensators erheblich reduziert werden. Da der Keramikkondensator wesentlich kleiner als der Elektrolytkondensator ist, kann der Abstand der Elektrolytkondensator-Anschlüsse in einfacher und flexibler Weise an die Abmessung des Keramikkondensators angepasst werden.

Der Elektrolytkondensator und der Keramikkondensator sind in einem gemeinsamen Gehäuse angeordnet. Hierdurch werden kurze Leitungslängen erzielt. Das Gehäuse weist insbesondere an einer Unterseite mindestens eine Öffnung auf, durch die sich die Anschlusskontakte erstrecken. Das Gehäuse ist vorzugsweise hohlzylinderförmig ausgebildet. Die mindestens eine Öffnung ist der Kontaktierungsebene zugewandt.

Der Elektrolytkondensator weist an der Stirnseite, an der die Elektrolytkondensator-Anschlüsse aus dem Wickel austreten, eine Abdichtung auf. Die Abdichtung ist insbesondere aus einem isolierenden Material, beispielsweise einem Gummimaterial ausgebildet. Die Abdichtung ist zwischen dem Wickel des Elektrolytkondensators und den Anschlusskontakten in dem Gehäuse angeordnet. Die Abdichtung erstreckt sich insbesondere im Bereich der mindestens einen Öffnung des Gehäuses. Der Keramikkondensator ist in einer Ausnehmung der Abdichtung angeordnet, so dass der Abstand zwischen dem Elektrolytkondensator und dem Keramikkondensator senkrecht zu der Kontaktierungsebene bzw. parallel zu der Wickelachse möglichst gering ist. Hierdurch werden kurze Leitungslängen erzielt.

Durch die reduzierten Leitungslängen werden die parasitären Serieninduktivitäten reduziert, so dass die Eigenresonanzfrequenz des Elektrolytkondensators und die Eigenresonanzfrequenz des Keramikkondensators in Richtung höherer Frequenzen verschoben und weitestgehend aneinander angeglichen werden. Der Frequenzbereich zwischen den Eigenresonanzfrequenzen wird damit soweit verschoben und minimiert, dass dieser das kapazitive Verhalten des Kondensator-Verbund-Bauteils in dem gewünschten Betriebsfrequenzbereich nicht mehr beeinträchtigt. Das erfindungsgemäße Kondensator-Verbund-Bauteil weist somit in zuverlässiger Weise das gewünschte elektrische Verhalten auf, so dass dieses in einfacher und flexibler Weise in eine elektronische Schaltung integrierbar ist.

Der Begriff Kontaktierungsebene ist funktional als Fläche zur Kontaktierung des Kondensator-Verbund-Bauteils mit einer Leiterplatte zu verstehen. Der Begriff Kontaktierungsebene ist keinesfalls streng geometrisch zu verstehen.

Ein Kondensator-Verbund-Bauteil nach Anspruch 2 gewährleistet eine einfache und zuverlässige Integration in eine elektronische Schaltung. Dadurch, dass die Wickelachse die Kontaktierungsebene schneidet, sind die Elektrolytkondensator-Anschlüsse der Kontaktierungsebene zugewandt, so dass kurze Leitungslängen erzielt werden. Die Elektrolytkondensator-Anschlüsse treten vorzugsweise an einer der Kontaktierungsebene zugewandten Stirnseite des Elektrolytkondensators aus dem Wickel aus. Vorzugsweise verlaufen die Elektrolytkondensator-Anschlüsse beabstandet zueinander und/oder beabstandet zu der Wickelachse. Die Elektrolytkondensator-Anschlüsse verlaufen insbesondere im Wesentlichen parallel zu der Wickelachse.

Ein Kondensator-Verbund-Bauteil nach Anspruch 3 gewährleistet eine einfache und zuverlässige Integration in eine elektronische Schaltung. Die Wickelachse verläuft vorzugsweise senkrecht zu der Kontaktierungsebene bzw. zu der Leiterplatte, auf die das Kondensator-Verbund-Bauteil montiert werden soll. Hierdurch werden kurze Leitungslängen und ein symmetrischer Aufbau erzielt. Vorzugsweise treten die Elektrolytkondensator-Anschlüsse an einer der Kontaktierungsebene zugewandten Stirnseite des Elektrolytkondensators aus dem Wickel aus. Die Elektrolytkondensator-Anschlüsse verlaufen vorzugsweise beabstandet zueinander und/oder beabstandet zu der Wickelachse. Die Elektrolytkondensator-Anschlüsse verlaufen insbesondere im Wesentlichen parallel zu der Wickelachse.

Ein Kondensator-Verbund-Bauteil nach Anspruch 4 gewährleistet eine einfache und zuverlässige Integration in eine elektronische Schaltung. Dadurch, dass die Elektrolytkondensator-Anschlüsse an einer der Kontaktierungsebene zugewandten Stirnseite des Elektrolytkondensators aus dem Wickel austreten, sind kurze Leitungslängen erzielbar. Der seitliche Abstand der Elektrolytkondensator-Anschlüsse ist geometrisch so an den Keramikkondensator angepasst, dass der Keramikkondensator möglichst exakt zwischen den Elektrolytkondensator-Anschlüssen angeordnet werden kann.

Ein Kondensator-Verbund-Bauteil nach Anspruch 5 gewährleistet eine einfache, flexible und zuverlässige Integration in eine elektronische Schaltung. Dadurch, dass die in Richtung der Kontaktierungsebene verlaufenden Elektrolytkondensator-Anschlüsse voneinander einen Abstand D haben, der im Wesentlichen der Abmessung d des Keramikkondensators quer bzw. parallel zu der Kontaktierungsebene und/oder senkrecht zu der Wickelachse entspricht, kann der Keramikkondensator in einfacher Weise zwischen den Elektrolytkondensator-Anschlüssen angeordnet werden. Hierdurch werden kurze Leitungslängen erzielt. Die Leitungslängen sind umso kürzer, je genauer die Abmessung d dem Abstand D entspricht.

Ein Kondensator-Verbund-Bauteil nach Anspruch 6 gewährleistet eine einfache, flexible und zuverlässige Integration in eine elektronische Schaltung. Die seitlich an dem Keramikkondensator ausgebildeten Keramikkondensator-Anschlüsse, die im Wesentlichen senkrecht zu der Kontaktierungsebene und/oder parallel zu den Elektrolytkondensator-Anschlüssen verlaufen, ermöglichen eine einfache Kontaktierung mit den Elektrolytkondensator-Anschlüssen. Da der Keramikkondensator zwischen den Elektrolytkondensator-Anschlüssen angeordnet ist, verlaufen die Elektrolytkondensator-Anschlüsse unmittelbar an den Keramikkondensator-Anschlüssen vorbei, so dass diese nur noch mit den Keramikkondensator-Anschlüssen kontaktiert werden müssen. Die Keramikkondensator-Anschlüsse sind an gegenüberliegenden Seiten des Keramikkondensators angeordnet, so dass die Elektrolytkondensator-Anschlüsse unmittelbar benachbart zu den Keramikkondensator-Anschlüssen verlaufen.

Ein Kondensator-Verbund-Bauteil nach Anspruch 7 gewährleistet eine einfache, flexible und zuverlässige Integration in eine elektronische Schaltung. Dadurch, dass die Keramikkondensator-Anschlüsse jeweils einteilig mit den zugehörigen Anschlusskontakten ausgebildet sind, sind die Leitungslängen kurz und die Verbindungsleitungen niederohmig. Vorzugsweise sind die Keramikkondensator-Anschlüsse seitlich an dem Keramikkondensator ausgebildet, so dass der jeweilige Keramikkondensator-Anschluss und der zugehörige Anschlusskontakt eine L-Form ausbilden. Der jeweilige Elektrolytkondensator-Anschluss ist unmittelbar mit dem zugehörigen Keramikkondensator-Anschluss und/oder mit dem zugehörigen Anschlusskontakt verbunden.

Ein Kondensator-Verbund-Bauteil nach Anspruch 8 gewährleistet eine einfache, flexible und zuverlässige Integration in eine elektronische Schaltung. Die in Richtung der Kontaktierungsebene verlaufenden Elektrolytkondensator-Anschlüsse sind in einfacher Weise um ca. 90° umgebogen, so dass die umgebogenen Abschnitte im Wesentlichen parallel zu der Kontaktierungsebene verlaufen und die einteilig mit dem Elektrolytkondensator-Anschlüssen ausgebildeten Anschlusskontakte bilden. Die Verbindung zwischen den Elektrolytkondensator-Anschlüssen und den zugehörigen Anschlusskontakten ist somit kurz und niederohmig. Die Keramikkondensator-Anschlüsse sind vorzugsweise seitlich an dem Keramikkondensator ausgebildet, so dass die in Richtung der Kontaktierungsebene verlaufenden Elektrolytkondensator-Anschlüsse unmittelbar an den Keramikkondensator-Anschlüssen vorbei laufen und in einfacher Weise mit diesen kontaktiert werden können.

Ein Kondensator-Verbund-Bauteil nach Anspruch 9 gewährleistet eine einfache und zuverlässige Integration in eine elektronische Schaltung. Der Elektrolytkondensator hat aufgrund einer zugehörigen ersten parasitären Serieninduktivität eine erste Eigenresonanzfrequenz $SRF_E$, wohingegen der Keramikkondensator aufgrund einer zugehörigen zweiten parasitären Serieninduktivität eine zweite Eigenresonanzfrequenz $SRF_K$ hat. Durch die vergleichsweise kurzen Leitungslängen der Parallelschaltung aus dem Elektrolytkondensator und dem Keramikkondensator werden die parasitären Serieninduktivitäten erheblich reduziert, so dass die Eigenresonanzfrequenzen $SRF_E$ und $SRF_K$ in Richtung höherer Frequenzen verschoben und aneinander angeglichen sind. Hierdurch verhält sich das Kondensator-Verbund-Bauteil bzw. die Parallelschaltung in einem gewünschten Betriebsfrequenzbereich, der über die Kapazitäten des Elektrolytkondensators und des Keramikkondensators einstellbar ist, in gewünschter Weise als kapazitives Bauteil. Die Integration in eine elektronische Schaltung ist somit einfach, flexibel und zuverlässig möglich.

Weitere Merkmale, Vorteile und Einzelheiten der Erfindung ergeben sich aus der nachfolgenden Beschreibung mehrerer Ausführungsbeispiele. Es zeigen:

Fig. 1 eine perspektivische Ansicht eines Kondensator-Verbund-Bauteils gemäß einem ersten Ausführungsbeispiel,

Fig. 2 einen Axialschnitt durch das Kondensator-Verbund-Bauteil in Fig. 1.

Fig. 3 ein Ersatzschaltbild des Kondensator-Verbund-Bauteils in Fig. 1,

Fig. 4 einen Verlauf der Impedanzen des Kondensator-Verbund-Bauteils in Abhängigkeit der Frequenz, und

Fig. 5 einen Axialschnitt durch ein Kondensator-Verbund-Bauteil gemäß einem zweiten Ausführungsbeispiel.

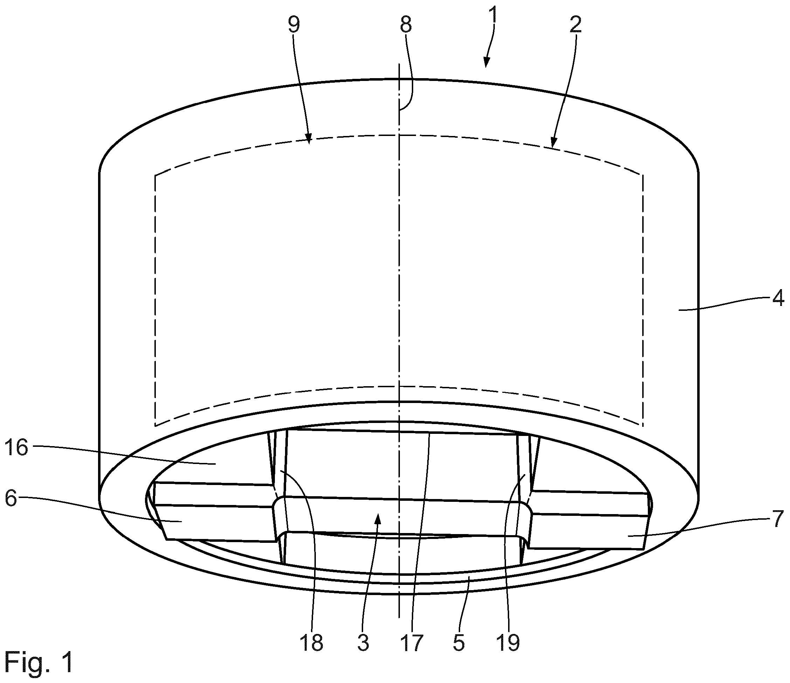

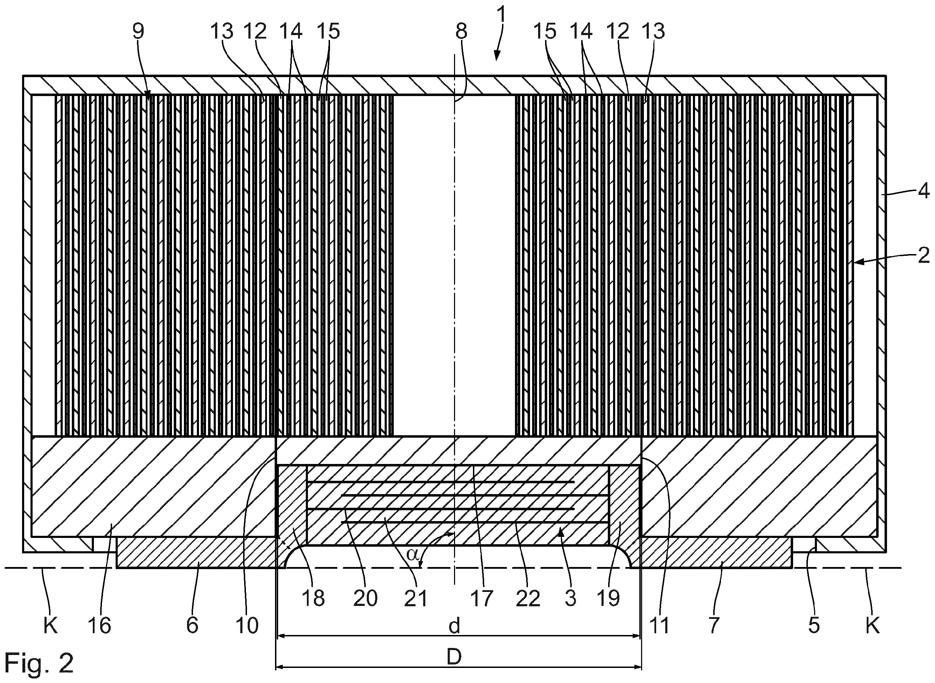

Nachfolgend ist anhand der Fig. 1 bis 4 ein erstes Ausführungsbeispiel der Erfindung beschrieben. Ein Kondensator-Verbund-Bauteil 1 weist einen Elektrolytkondensator 2 und einen Keramikkondensator 3 auf, die parallel geschaltet sind. Der Elektrolytkondensator 2 und der Keramikkondensator 3 sind in einem Gehäuse 4 angeordnet, das an einer Unterseite eine Öffnung 5 aufweist. Das Gehäuse 4 ist hohlzylinderförmig ausgebildet. Durch die Öffnung 5 erstrecken sich Anschlusskontakte 6, 7, die eine Kontaktierungsebene K definieren und zur Kontaktierung mit einer nicht näher dargestellten Leiterplatte bzw. Platine dienen.

Der Elektrolytkondensator 2 ist als Wickelkondensator ausgebildet. Der Elektrolytkondensator 2 umfasst einen um eine Wickelachse 8 verlaufenden Wickel 9 und aus dem Wickel 9 herausgeführte Elektrolytkondensator-Anschlüsse 10, 11. Der Wickel 9 umfasst eine Kathodenfolie 12 und einen Anodenfolie 13, die durch einen Papier-Abstandshalter 14 und ein Elektrolyt 15, mit dem der Papier-Abstandshalter 14 getränkt ist, getrennt sind. Der erste Elektrolytkondensator-Anschluss 10 ist mit der Kathodenfolie 12 kontaktiert, wohingegen der zweite Elektrolytkondensator-Anschluss 11 mit der Anodenfolie 13 kontaktiert ist.

Die Wickelachse 8 schließt mit der Kontaktierungsebene K einen Winkel $\alpha$ ein, wobei gilt: $45° \leq \alpha \leq 135°$, insbesondere $60° \leq \alpha \leq 120°$, und insbesondere $75° \leq \alpha \leq 105°$. Vorzugsweise gilt: $\alpha = 90°$. Der Wickel 9 ist also so angeordnet, dass die Wickelachse 8 die Kontaktierungsebene K schneidet. Die Elektrolytkondensator-Anschlüsse 10, 11 treten an einer Seite aus dem Wickel 9 aus, die der Kontaktierungsebene K zugewandt ist.

Zwischen dem Wickel 9 und den Anschlusskontakten 6, 7 ist eine Abdichtung 16 in dem Gehäuse 4 angeordnet, die den Wickel 9 von dem Keramikkondensator 3 und den Anschlusskontakten 6, 7 trennt. Die Abdichtung 16 ist beispielsweise aus einem Gummimaterial. Die Abdichtung 16 weist eine Ausnehmung 17 auf, in der der Keramikkondensator 3 angeordnet ist. Die Ausnehmung 17 ist im Wesentlichen mittig zu der Wickelachse 8 angeordnet. Der Keramikkondensator 3 ist somit zwischen dem Elektrolytkondensator 2 und der Kontaktierungsebene K angeordnet.

Die Elektrolytkondensator-Anschlüsse 10, 11 treten in einem Abstand D voneinander aus dem Wickel 9 aus. Die Elektrolytkondensator-Anschlüsse 10, 11 verlaufen außerhalb des Wickels 9 im Wesentlichen parallel zueinander und parallel zu der Wickelachse 8. Der Keramikkondensator 3 ist - parallel zu der Kontaktierungsebene K betrachtet - zwischen den Elektrolytkondensator-Anschlüssen 10, 11 angeordnet. Der Keramikkondensator 3 weist einen ersten Keramikkondensator-Anschluss 18 und einen zweiten Keramikkondensator-Anschluss 19 auf, die seitlich an dem Keramikkondensator 3 angeordnet sind und eine - parallel zu der Kontaktierungsebene K betrachtet - Abmessung d definieren. Für das Verhältnis d/D gilt: $0,7 \leq d/D \leq 1,3$, insbesondere $0,8 \leq d/D \leq 1,2$, und insbesondere $0,9 \leq d/D \leq 1,1$. Vorzugsweise gilt: $d/D \approx 1$. Je genauer der Abstand D und die Abmessung d übereinstimmen, desto einfacher können die Elektrolytkondensator-Anschlüsse 10, 11 mit den entsprechenden Keramikkondensator-Anschlüssen 18, 19 bzw. den Anschlusskontakten 6, 7 kontaktiert werden.

Zur Parallelschaltung des Elektrolytkondensators 2 und des Keramikkondensators 3 durchdringt der erste Elektrolytkondensator-Anschluss 10 die Abdichtung 16 und ist unmittelbar mit dem Keramikkondensator-Anschluss 18 und/oder unmittelbar mit dem Anschlusskontakt 6 verbunden. Entsprechend durchdringt der zweite Elektrolytkondensator-Anschluss 11 die Abdichtung 16 und ist unmittelbar mit dem zweiten Keramikkondensator-Anschluss 19 und/oder unmittelbar mit dem zweiten Anschlusskontakt 7 verbunden.

Der erste Keramikkondensator-Anschluss 18 ist einteilig mit dem ersten Anschlusskontakt 6 verbunden, so dass diese zusammen eine L-Form haben. Entsprechend ist der zweite Keramikkondensator-Anschluss 19 einteilig mit dem zweiten Anschlusskontakt 7 verbunden, so dass diese eine L-Form haben.

Der Keramikkondensator 3 weist mehrere erste Elektroden 20 auf, die mit dem ersten Keramikkondensator-Anschluss 18 verbunden sind und durch ein keramisches Dielektrikum 21 von mehreren zweiten Elektroden 22 getrennt sind, die mit dem zweiten Keramikkondensator-Anschluss 19 verbunden sind.

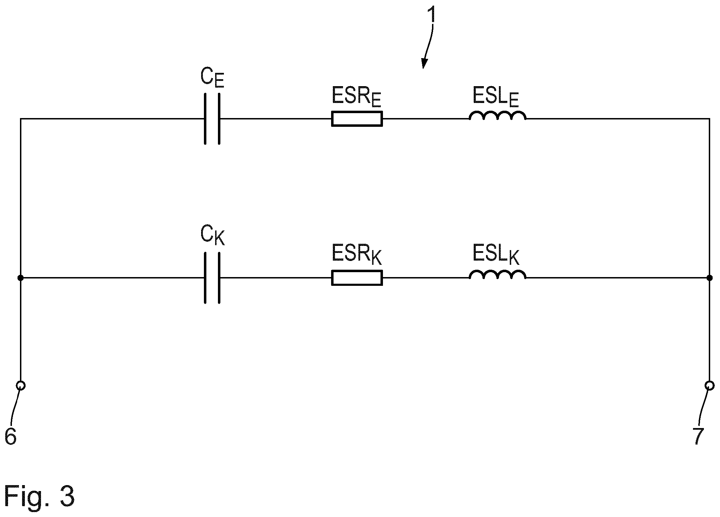

Der Elektrolytkondensator 2 weist eine Kapazität $C_E$, einen parasitären Serienwiderstand $ESR_E$ und eine parasitäre Serieninduktivität $ESL_E$ auf. Entsprechend weist der Keramikkondensator 3 eine Kapazität $C_K$, einen parasitären Serienwiderstand $ESR_K$ und eine parasitäre Serieninduktivität $ESL_K$ auf. Das Ersatzschaltbild der Parallelschaltung des Elektrolytkondensators 2 und des Keramikkondensators 3 ist in Fig. 3 veranschaulicht. Die Widerstände für den jeweiligen Leckstrom wurden in dem Ersatzschaltbild in Fig. 3 vernachlässigt.

Der Elektrolytkondensator 2 hat eine erste Eigenresonanzfrequenz $SRF_E$ für die gilt:

$$SRF_E = \frac{1}{2\pi\sqrt{ESL_E \cdot C_E}}$$

Entsprechend hat der Keramikkondensator 3 eine zweite Eigenresonanzfrequenz $SRF_K$, für die gilt:

$$SRF_K = \frac{1}{2\pi\sqrt{ESL_K \cdot C_K}}$$

In die parasitären Serieninduktivitäten $ESL_E$ und $ESL_K$ gehen die Verbindungsleitungen ein, also die Elektrolytkondensator-Anschlüsse 10, 11 und die Keramikkondensator-Anschlüsse 18, 19 sowie die Anschlusskontakte 6, 7. Je kürzer die Leitungslängen der Verbindungsleitungen sind, desto geringer sind die parasitären Serieninduktivitäten $ESL_E$ und $ESL_K$.

Durch den mechanischen Aufbau des Kondensator-Verbund-Bauteils 1 sind die Leitungslängen der Verbindungsleitungen vergleichsweise kurz, so dass die Eigenresonanzfrequenzen $SRF_E$ und $SRF_K$ erhöht werden und unterhalb der Eigenresonanzfrequenzen $SRF_E$ und $SRF_K$ ein vergleichsweise größerer Betriebsfrequenzbereich $\Delta F$ zur Verfügung steht. In dem Betriebsfrequenzbereich $\Delta F$ verhält sich sowohl der Elektrolytkondensator 2 als auch der Keramikkondensator 3 kapazitiv. Durch die vergleichsweise kurzen Verbindungsleitungen wird insbesondere die Eigenresonanzfrequenz $SRF_E$ des Elektrolytkondensators 2 erhöht, so dass die niedrigere Eigenresonanzfrequenz $SRF_E$ des Elektrolytkondensators 2 an die höhere Eigenresonanzfrequenz $SRF_K$ des Keramikkondensators 3 angeglichen wird. Für ein Verhältnis der Eigenresonanzfrequenz $SRF_E$ zu der Eigenresonanzfrequenz $SRF_K$ gilt: $0{,}7 \leq SRF_E/SRF_K \leq 1{,}3$, insbesondere $0{,}8 \leq SRF_E/SRF_K \leq 1{,}2$, und insbesondere $0{,}9 \leq SRF_E/SRF_K \leq 1{,}1$. Die Eigenresonanzfrequenzen $SRF_E$ und $SRF_K$ sind durch die Wahl der Kapazitäten $C_E$ und $C_K$ in gewünschter Weise aneinander anpassbar.

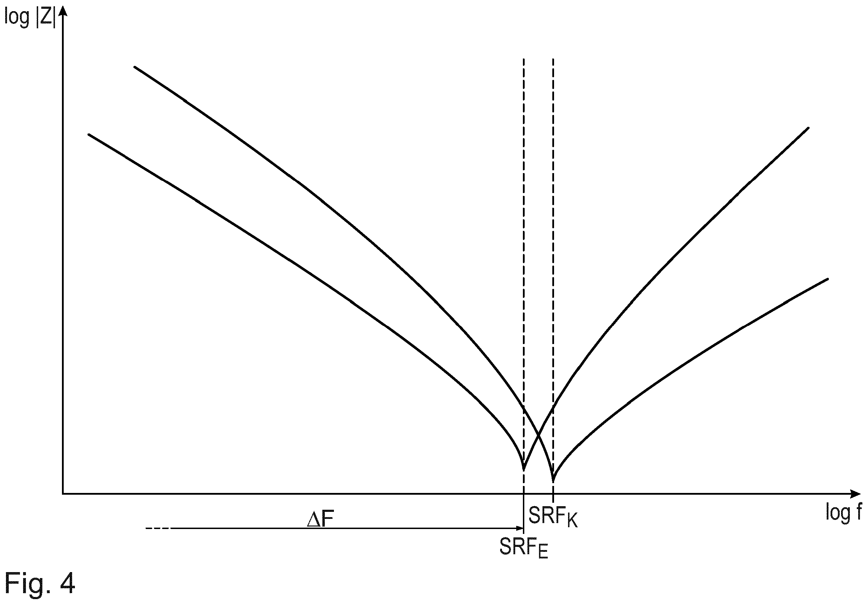

In Fig. 4 ist qualitativ ein Betrag der Impedanzen des Elektrolytkondensators 2 und des Keramikkondensators 3 in Abhängigkeit der Frequenz f dargestellt. Die Frequenz f und der Betrag der Impedanzen sind logarithmisch auf der Abszisse und der Ordinate aufgetragen. Dadurch, dass die Eigenresonanzfrequenzen $SRF_E$ und $SRF_K$ zu vergleichsweise höheren Frequenzen f verschoben sind, steht der vergleichsweise größere Betriebsfrequenzbereich $\Delta F$ zur Verfügung. Zudem ist der Frequenzbereich zwischen den Eigenresonanzfrequenzen $SRF_E$ und $SRF_K$ vergleichsweise klein, so dass eine Parallelresonanz und eine Impedanzüberhöhung der Parallelschaltung des Elektrolytkondensators 2 und des Keramikkondensators 3 in diesem Frequenzbereich wirkungsvoll vermieden werden.

Dadurch, dass ein vergleichsweise großer Betriebsfrequenzbereich $\Delta F$ zur Verfügung steht und eine Impedanzüberhöhung außerhalb des Betriebsfrequenzbereichs $\Delta F$ vermieden wird, ist das Kondensator-Verbund-Bauteil 1 einfach, flexibel und zuverlässig in eine elektronische Schaltung integrierbar.

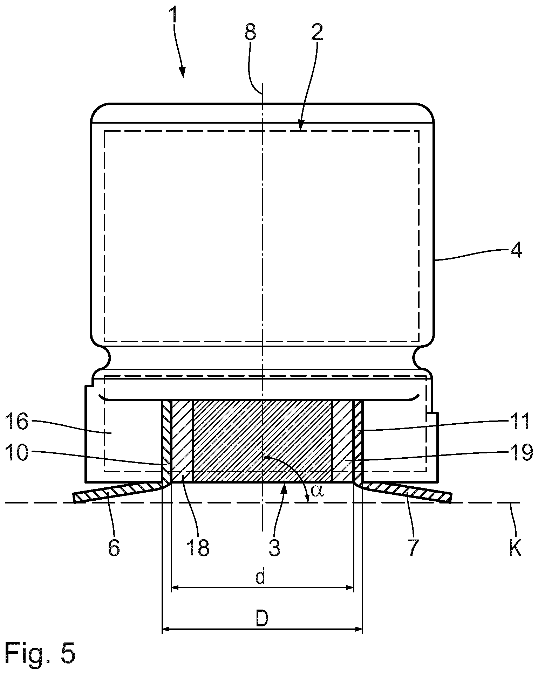

Nachfolgend ist anhand von Fig. 5 ein zweites Ausführungsbeispiel der Erfindung beschrieben. Im Unterschied zu dem ersten Ausführungsbeispiel ist der erste Elektrolytkondensator-Anschluss 10 einteilig mit dem ersten Anschlusskontakt 6 ausgebildet, die zusammen eine L-Form bilden. Entsprechend ist der zweite Elektrolytkondensator-Anschluss 11 einteilig mit dem zweiten Anschlusskontakt 7 ausgebildet, die zusammen eine L-Form bilden. Hinsichtlich des weiteren Aufbaus und der weiteren Funktionsweise wird auf das vorangegangene Ausführungsbeispiel verwiesen.

Allgemein gilt zudem Folgendes:

Der Elektrolytkondensator 2 ist beispielsweise als Polymer-Elektrolytkondensator ausgebildet. Der Elektrolytkondensator 2 weist gegenüber dem Keramikkondensator 3 eine höhere Kapazität auf. Die Kapazität $C_E$ des Elektrolytkondensators 2 kann bis 1000 $\mu$F, insbesondere bis 3000 $\mu$F und insbesondere bis 5000 $\mu$F betragen. Demgegenüber kann die Kapazität $C_K$ des Keramikkondensators 3 bis 100 $\mu$F, insbesondere bis 300 $\mu$F, und insbesondere bis 500 $\mu$F betragen. Das Kondensator-Verbund-Bauteil 1 weist auch bei vergleichsweise hohen Frequenzen f eine niedrige Impedanz auf und ermöglicht damit eine hohe Störunterdrückung von Schaltpulsen bei Verwendung des Kondensator-Verbund-Bauteils 1 in einer elektronischen Schaltung. Durch den geringen Flächenbedarf, die geringen parasitären Effekte und den geringen Bestückungsaufwand ist das Kondensator-Verbund-Bauteil 1 in einfacher, flexibler und zuverlässiger Weise in eine elektronische Schaltung integrierbar und zur Bestückung einer Leiterplatte bzw. Platine verwendbar. Das Kondensator-Verbund-Bauteil 1 ermöglicht beispielsweise einem Schaltregler über den gesamten Frequenzbereich eine niedrige Impedanz, so dass Lastwechsel gepuffert und Störungen durch die Schaltpulse unterdrückt werden können. Entsprechendes gilt für Schaltwandler und andere Anwendungen, die einen Ladungspuffer für Lastsprünge benötigen und hochfrequente Schaltpulse an ihrer Ausbreitung hindern müssen. Dadurch, dass der Keramikkondensator 3 zwischen den Elektrolytkondensator-Anschlüssen 10, 11 angeordnet ist, sind die Verbindungsleitungen kurz. Da der parasitäre Serienwiderstand $ESR_K$ des Keramikkondensators 3 sehr viel geringer als der parasitäre Serienwiderstand $ESR_E$ des Elektrolytkondensators 2 ist und der Keramikkondensator 3 ein besseres Hochfrequenzverhalten bzw. eine geringere Impedanz bei hohen Frequenzen hat, weist das Kondensator-Verbund-Bauteil 1 ein verbessertes EMV-Verhalten (EMV: elektromagnetische Verträglichkeit) auf.

**Patentansprüche**

1.  Kondensator-Verbund-Bauteil umfassend

    - ein Gehäuse (4),
    - zwei Anschlusskontakte (6, 7), die eine Kontaktierungsebene (K) definieren,
    - einen Elektrolytkondensator (2),

        -- der einen Wickel (9) und zwei Elektrolytkondensator-Anschlüsse (10, 11) umfasst,
        -- der mit den Anschlusskontakten (6, 7) elektrisch leitend verbunden ist,

    - einen Keramikkondensator (3),

        -- der parallel zu dem Elektrolytkondensator (2) geschaltet und mit den Anschlusskontakten (6, 7) elektrisch leitend verbunden ist,
        -- der zwischen dem Elektrolytkondensator (2) und der Kontaktierungsebene (K) angeordnet ist,
        -- der zwischen den Elektrolytkondensator-Anschlüssen (10, 11) angeordnet ist,

    wobei der Elektrolytkondensator (2) und der Keramikkondensator (3) in dem Gehäuse (4) angeordnet sind,
    **dadurch gekennzeichnet,**
    **dass** der Elektrolytkondensator (2) und der Keramikkondensator (3) durch eine Abdichtung (16) getrennt sind,
    **dass** die Abdichtung (16) in dem Gehäuse (4) angeordnet ist,
    **dass** die Abdichtung (16) eine Ausnehmung (17) aufweist, in der der Keramikkondensator (3) angeordnet ist.

2.  Kondensator-Verbund-Bauteil nach Anspruch 1, **dadurch gekennzeichnet,**
    **dass** der Wickel (9) eine Wickelachse (8) definiert, die die Kontaktierungsebene (K) schneidet.

3.  Kondensator-Verbund-Bauteil nach Anspruch 1 oder 2, **dadurch gekennzeichnet,**
    **dass** der Wickel (9) eine Wickelachse (8) definiert, die mit der Kontaktierungsebene (K) einen Winkel $\alpha$ einschließt, wobei gilt: $45° \leq \alpha \leq 135°$, insbesondere $60° \leq \alpha \leq 120°$, und insbesondere $75° \leq \alpha \leq 105°$.

4.  Kondensator-Verbund-Bauteil nach einem der Ansprüche 1 bis 3,
    **dadurch gekennzeichnet,**
    **dass** die Elektrolytkondensator-Anschlüsse (10, 11) an einer Seite aus dem Wickel (9) austreten, die der Kontaktierungsebene (K) zugewandt ist.

5.  Kondensator-Verbund-Bauteil nach einem der Ansprüche 1 bis 4,
    **dadurch gekennzeichnet,**
    **dass** die Elektrolytkondensator-Anschlüsse (10, 11) voneinander einen Abstand D haben und der Keramikkondensator (3) parallel zu der Kontaktierungsebene (K) einen Abmessung d hat, wobei gilt: $0,7 \leq d/D \leq 1,3$, insbesondere $0,8 \leq d/D \leq 1,2$, und insbesondere $0,9 \leq d/D \leq 1,1$.

6.  Kondensator-Verbund-Bauteil nach einem der Ansprüche 1 bis 5,
    **dadurch gekennzeichnet,**
    **dass** zwei Keramikkondensator-Anschlüsse (18, 19) seitlich an dem Keramikkondensator (3) ausgebildet sind.

7.  Kondensator-Verbund-Bauteil nach einem der Ansprüche 1 bis 6,
    **dadurch gekennzeichnet,**
    **dass** der Keramikkondensator (3) zwei Keramikkondensator-Anschlüsse (18, 19) aufweist, die jeweils einteilig mit einem der Anschlusskontakte (6, 7) ausbildet sind.

8.  Kondensator-Verbund-Bauteil nach einem der Ansprüche 1 bis 6,
    **dadurch gekennzeichnet,**
    **dass** die Elektrolytkondensator-Anschlüsse (10, 11) jeweils einteilig mit einem der Anschlusskontakte (6, 7) ausbildet sind.

9.  Kondensator-Verbund-Bauteil nach einem der Ansprüche 1 bis 8,
    **dadurch gekennzeichnet,**
    **dass** der Elektrolytkondensator (2) eine erste Eigenresonanzfrequenz $SRF_E$ hat und der Keramikkondensator (3) eine zweite Eigenresonanzfrequenz $SRF_K$ hat, wobei gilt: $0,7 \leq SRF_E/SRF_K \leq 1,3$, insbesondere $0,8 \leq SRF_E/SRF_K \leq 1,2$, und insbesondere $0,9 \leq SRF_E/SRF_K \leq 1,1$.

**Claims**

1.  Capacitor composite component comprising

    - a housing (4),
    - two terminal contacts (6, 7), which define a contacting plane (K),
    - an electrolytic capacitor (2),

        -- which comprises a winding (9) and two electrolytic capacitor terminals (10, 11),
        -- which is electrically conductively connected to the terminal contacts (6, 7),

    - a ceramic capacitor (3),

-- which is connected in parallel with the electrolytic capacitor (2) and is electrically conductively connected to the terminal contacts (6, 7),

-- which is arranged between the electrolytic capacitor (2) and the contacting plane (K),

-- which is arranged between the electrolytic capacitor terminals (10, 11),

wherein the electrolytic capacitor (2) and the ceramic capacitor (3) are arranged in the housing (4),

**characterized in that**

the electrolytic capacitor (2) and the ceramic capacitor (3) are separated by a seal (16),

**in that** the seal (16) is arranged in the housing (4),

**in that** the seal (16) has a cutout (17), in which the ceramic capacitor (3) is arranged.

2. Capacitor composite component according to Claim 1, **characterized in that** the winding (9) defines a winding axis (8) that intersects the contacting plane (K).

3. Capacitor composite component according to Claim 1 or 2, **characterized in that** the winding (9) defines a winding axis (8) that forms an angle $\alpha$ with the contacting plane (K), wherein it holds true that: $45° \leq \alpha \leq 135°$, in particular $60° \leq \alpha \leq 120°$ and in particular $75° \leq \alpha \leq 105°$.

4. Capacitor composite component according to any of Claims 1 to 3, **characterized in that** the electrolytic capacitor terminals (10, 11) emerge from the winding (9) at a side facing the contacting plane (K).

5. Capacitor composite component according to any of Claims 1 to 4, **characterized in that** the electrolytic capacitor terminals (10, 11) are at a distance D from one another and the ceramic plane (3) has a dimension d parallel to the contacting plane (K), wherein it holds true that: $0.7 \leq d/D \leq 1.3$, in particular $0.8 \leq d/D \leq 1.2$ and in particular $0.9 \leq d/D \leq 1.1$.

6. Capacitor composite component according to any of Claims 1 to 5, **characterized in that** two ceramic capacitor terminals (18, 19) are formed laterally at the ceramic capacitor (3).

7. Capacitor composite component according to any of Claims 1 to 6, **characterized in that** the ceramic capacitor (3) has two ceramic capacitor terminals (18, 19), which are respectively formed integrally with one of the terminal contacts (6, 7).

8. Capacitor composite component according to any of Claims 1 to 6, **characterized in that** the electrolytic capacitor terminals (10, 11) are respectively formed integrally with one of the terminal contacts (6, 7).

9. Capacitor composite component according to any of Claims 1 to 8, **characterized in that** the electrolytic capacitor (2) has a first natural resonant frequency $SRF_E$ and the ceramic capacitor (3) has a second natural resonant frequency $SRF_K$, wherein it holds true that: $0.7 \leq SRF_E/SRF_K \leq 1.3$, in particular $0.8 \leq SRF_E/SRF_K \leq 1.2$, and in particular $0.9 \leq SRF_E/SRF_K \leq 1.1$.

**Revendications**

1. Composant composite de condensateur comprenant

- un boîtier (4),
- deux contacts de raccordement (6, 7), qui définissent un plan d'établissement de contact (K),
- un condensateur électrolytique (2),

-- qui comprend une bobine (9) et deux bornes de condensateur électrolytique (10, 11),

-- qui est relié de manière électroconductrice aux contacts de raccordement (6, 7),

- un condensateur en céramique (3),

-- qui est branché en parallèle par rapport au condensateur électrolytique (2) et est relié de manière électroconductrice aux contacts de raccordement (6, 7),

-- qui est disposé entre le condensateur électrolytique (2) et le plan d'établissement de contact (K),

-- qui est disposé entre les bornes de condensateur électrolytique (10, 11),

dans lequel le condensateur électrolytique (2) et le condensateur en céramique (3) sont disposés dans le boîtier (4),

**caractérisé en ce**

**que** le condensateur électrolytique (2) et le condensateur en céramique (3) sont séparés par une étanchéification (16),

**que** l'étanchéification (16) est disposée dans le boîtier (4),

**que** l'étanchéification (16) présente un évidement (17), dans lequel est disposé le condensateur en céramique (3).

2. Composant composite de condensateur selon la revendication 1, **caractérisé en ce que** la bobine (9) définit un axe de bobine (8), qui coupe le plan d'établissement de contact (K).

3. Composant composite de condensateur selon la revendication 1 ou 2, **caractérisé en ce que** la bobine (9) définit un axe de bobine (8), qui forme avec le plan d'établissement de contact (K) un angle a, dans lequel s'applique : $45° \leq \alpha \leq 135°$, en particulier $60° \leq \alpha \leq 120°$, et en particulier $75° \leq \alpha \leq 105°$.

4. Composant composite de condensateur selon l'une quelconque des revendications 1 à 3, **caractérisé en ce que** les bornes de condensateur électrolytique (10, 11) sortent au niveau d'un côté de la bobine (9), qui est tourné vers le plan d'établissement de contact (K).

5. Composant composite de condensateur selon l'une quelconque des revendications 1 à 4, **caractérisé en ce que** les bornes de condensateur électrolytique (10, 11) ont les unes des autres une distance D et le condensateur en céramique (3) a en parallèle par rapport au plan d'établissement de contact (K) une dimension d, dans lequel s'applique : $0,7 \leq d/D \leq 1,3$, en particulier $0,8 \leq d/D \leq 1,2$, et en particulier $0,9 \leq d/D \leq 1,1$.

6. Composant composite de condensateur selon l'une quelconque des revendications 1 à 5, **caractérisé en ce que** deux bornes de condensateur en céramique (18, 19) sont réalisées de manière latérale au niveau du condensateur en céramique (3).

7. Composant composite de condensateur selon l'une quelconque des revendications 1 à 6, **caractérisé en ce que** le condensateur en céramique (3) présente deux bornes de condensateur en céramique (18, 19), qui sont réalisées respectivement en une partie avec un des contacts de raccordement (6, 7).

8. Composant composite de condensateur selon l'une quelconque des revendications 1 à 6, **caractérisé en ce que** les bornes de condensateur électrolytique (10, 11) sont réalisées respectivement d'un seul tenant avec un des contacts de raccordement (6, 7).

9. Composant composite de condensateur selon l'une quelconque des revendications 1 à 8, **caractérisé en ce que** le condensateur électrolytique (2) a une première fréquence de résonance propre $SRF_E$ et le condensateur en céramique (3) a une deuxième fréquence de résonance propre $SRF_K$, dans lequel s'applique : $0,7 \leq SRF_E/SRF_K \leq 1,3$, en particulier $0,8 \leq SRF_E/SRF_K \leq 1,2$, et en particulier $0,9 \leq SRF_E/SRF_K \leq 1,1$.

Fig. 1

Fig. 2

EP 3 662 491 B1

Fig. 3

Fig. 4

log |Z|

log f

$\Delta F$

$SRF_K$

$SRF_E$

EP 3 662 491 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170018373 A1
- JP 2017199867 A
- JP 55047718 U